# EUROPÄISCHE PATENTSCHRIFT

(11) **EP 3 105 841 B1**
(45) Veröffentlichungstag und Bekanntmachung des Hinweises auf die Patenterteilung: **04.12.2019**
(21) Anmeldenummer: 14821127.9
(22) Anmeldetag: 16.12.2014
(51) Int. Cl.: H02K 5/12, H02K 5/14, H02K 5/08, H02K 11/026

(54) **KOHLEBÜRSTENANORDNUNG**
CARBON BRUSH ARRANGEMENT
ENSEMBLE BALAI CHARBON

(30) Priorität: 12.02.2014 DE 102014202556
(43) Veröffentlichungstag der Anmeldung: 21.12.2016
(73) Patentinhaber: Schunk Carbon Technology GmbH, 4822 Bad Goisern (AT)
(72) Erfinder: WEBER, Markus, A-4822 Bad Goisern (AT)
(74) Vertreter: advotec.
(86) Internationale Anmeldenummer: PCT/EP2014/078007
(87) Internationale Veröffentlichungsnummer: WO 2015/120932

(56) Entgegenhaltungen:
- EP-A1- 2 044 661
- DE-A1- 19 921 539
- FR-A1- 2 845 736
- GB-A- 2 154 375
- JP-A- 2010 050 886
- US-A1- 2008 298 985
- US-A1- 2009 317 264
- US-A1- 2012 291 277
- DUPONT (TM) TEFLON ET AL: "DuPont Fluoropolymers", ., 31. Mai 2012 (2012-05-31), XP055196153,
- Yokogawa: "PFA Liner Durable Under Any Process Condition", , 1 March 2012 (2012-03-01), XP055507926, Retrieved from the Internet: URL:https://web-material3.yokogawa.com/LF0 1E00A00-12EN.us.pdf [retrieved on 2018-09-18]

## Beschreibung

Die vorliegende Erfindung betrifft eine Kohlebürstenanordnung zum Anschluss an einen Elektromotor mit zumindest einer Kohlebürste, die über einen mit einer Kunststoffummantelung versehenen Anschlussleiter mit einer mit einem Anschlussgehäuse aus Kunststoff versehenen Anschlusseinrichtung verbunden ist.

Kohlebürstenanordnungen der eingangs genannten Art werden zur Spannungsversorgung von Elektromotoren in einer aggressiven Umgebung eingesetzt, wo die Anschlussleiter in besonderem Maße gegen Korrosionseinflüsse durch die Kunststoffummantelung abgeschirmt werden müssen. Beispielsweise ist dies der Fall bei Elektromotoren, die zum Antrieb einer Kraftstoffpumpe in einem Kraftstoffbehälter eingesetzt werden. Dabei hat sich insbesondere die Verwendung von Polytetrafluorethylen (PTFE) als Material zur Herstellung einer Kunststoffummantelung für die Anschlussleiter der Kohlebürsten bewährt, da PTFE eine hohe chemische Beständigkeit und insbesondere eine sehr gute Kraftstoffbeständigkeit aufweist. Obwohl PTFE den Thermoplasten zuzurechnen ist, erweist sich eine thermoplastische Verarbeitung von PTFE, also beispielsweise eine Aufbringung von PTFE auf die Anschlussleiter zur Ausbildung der Kunststoffummantelung in einem Spritzgießverfahren in der Praxis als schwierig, sodass bereits in der DE 199 21 540 A1 vorgeschlagen wird, für eine Umspritzung eines Anschlussleiters, also eine Ausbildung der Kunststoffummantelung im Spritzgießverfahren, andere kraftstoffbeständige Kunststoffe zu verwenden, wie beispielsweise POM und PPS. Zur Erzielung der gewünschten Kraftstoffbeständigkeit werden bei der Verwendung von POM und PPS Wandstärken der Kunststoffummantelung erforderlich, die zu einer hohen Steifigkeit des Anschlussleiters führen. Diese hohe Steifigkeit wurde bereits in der EP 2 044 661 B1 als Nachteil erkannt, da die Steifigkeit der Anschlussleiter der in der Praxis geforderten ausreichenden Flexibilität der Anschlussleiter, die für einen permanenten Kontakt der verschleißenden Kohlebürsten mit dem Kommutator des Elektromotors erforderlich ist, entgegensteht.

Um diesen Nachteil auszuräumen, wird daher in der EP 2 044 661 A1 vorgeschlagen, die Kunststoffummantelung des Anschlussleiters aus Polytetrafluorethylen (PTFE) auszubilden, das aufgrund seiner im Vergleich zu den bekannten Kunststoffen erhöhten Kraftstoffbeständigkeit auch eine wirksam schützende Kunststoffummantelung mit geringerer Wandstärke ermöglicht. Durch die geringe Wandstärke der Kunststoffumhüllung wird eine ausreichende Flexibilität der Anschlussleiter ermöglicht, sodass der für den reibungslosen Betrieb des Elektromotors erforderliche permanente Kontakt zwischen der Kohlebürste und dem Kommutator des Elektromotors nicht beeinträchtigt wird.

Zur Herstellung der Kohlebürstenanordnungen der eingangs genannten Art, die am Ende des Anschlussleiters eine Anschlusseinrichtung aufweisen mit einem Anschlussgehäuse aus Kunststoff, das zur Aufnahme einer häufig als Entstörteil bezeichneten elektrischen Anordnung dient, die regelmäßig einen Kondensator und eine Drossel aufweist, hat sich herausgestellt, dass es aufgrund der Ausbildung des Anschlussgehäuses durch Umspritzen der elektrischen Anordnung mit einem thermoplastischen Kunststoff in einem Übergangsbereich zur Kunststoffummantelung des Anschlussleiters zu Fehlstellen der Kunststoffummantelung kommen kann. Dies wird unter anderem auf die geringe Wandstärke der Kunststoffummantelung aus PTFE und die grundsätzlich mangelnde Eignung von PTFE zur Verarbeitung in einem Spritzgießverfahren zurückgeführt.

DuPont™ Teflon et al.: "DuPont Fluoropolymers", 31. Mai 2012, XP055196153 offenbart, dass Dupont™Teflon®PFA Resin ein flexibler Kunststoff ist.

Dass PFA grundsätzlich als Drahtisolationsmaterial in Motoren einsetzbar ist, geht aus der US 2009/317264 A1 hervor.

US 2012/291277 A1 lehrt eine Kohlebürstenanordnung, welche sich zum Anschluss an einen Elektromotor eignet. Die Kohlebürstenanordnung umfasst eine Kohlebürste, die über einen mit einer Kunststoffummantelung aus FEP versehenen Anschlussleiter mit einem nicht gezeigten Anschlussstück verbindbar ist.

Aus D 10 Yokogawa: "PFA Liner Durable Under Any Process Condition", 1. März 2012, XP055507926 ist es bekannt, dass PFA vergleichbare Eigenschaften mit PTFE aufweist und für die Ausbildung isolierender Beschichtungen im Spritzgießverfahren besonders geeignet ist.

Der vorliegenden Erfindung liegt die Aufgabe zugrunde, eine Kohlebürstenanordnung der eingangs genannten Art vorzuschlagen, die einerseits eine Herstellung sowohl der Kunststoffummantelung als auch des Anschlussgehäuses in einem Spritzgießverfahren ermöglicht und andererseits die Voraussetzungen für einen zuverlässigen Betrieb der Kohlebürstenanordnung mit ausreichender Kraftstoffbeständigkeit gewährleistet.

Zur Lösung dieser Aufgabe weist die erfindungsgemäße Kohlebürstenanordnung die Merkmale des Anspruchs 1 auf.

Erfindungsgemäß besteht die Kunststoffummantelung zumindest in einem Übergangsbereich zum Anschlussgehäuse aus einem Perfluoralkoxy-Polymer (PFA), und der Übergangsbereich ist durch Umspritzung als Anschlussgehäuse ausgebildet.

Im Vergleich zu PTFE weist PFA eine größere Flexibilität auf, sodass PFA die Ausbildung der Kunststoffummantelung mit einer größeren Wandstärke in einem Spritzgießverfahren bei immer noch ausreichender Flexibilität der Kunststoffummantelung zur Erzielung der für den reibungslosen Betrieb erforderlichen Beweglichkeit der Anschlussleiter ermöglicht. Weiter hat sich herausgestellt, dass die Kunststoffummantelung aus PFA zur Ausbildung des Anschlussgehäuses mit einem weiteren thermoplastischen Kunststoffmaterial umspritzt werden kann, ohne dass es in dem beim Spritzgießvorgang ausgebildeten Übergangsbereich zwischen dem Anschlussgehäuse und der Kunststoffummantelung zur Ausbildung von Fehlstellen kommt.

Erfindungsgemäß ist das Anschlussgehäuse aus einem weiteren thermoplastischen Kunststoffmaterial gebildet, das nämlich ebenfalls aus PFA gebildet ist. Bei einer besonders bevorzugten Ausführungsform der Kohlebürstenanordnung ist nicht nur der prekäre Übergangsbereich zwischen der Kunststoffummantelung und dem Anschlussgehäuse aus PFA gebildet; vielmehr besteht die Kunststoffummantelung auf ihrer gesamten Länge zwischen der Kohlebürste und dem Anschlussgehäuse aus PFA, sodass die gewünschte hohe Flexibilität des Anschlussleiters nicht nur im Übergangsbereich, sondern über die gesamte Länge des Anschlussleiters gewährleistet ist.

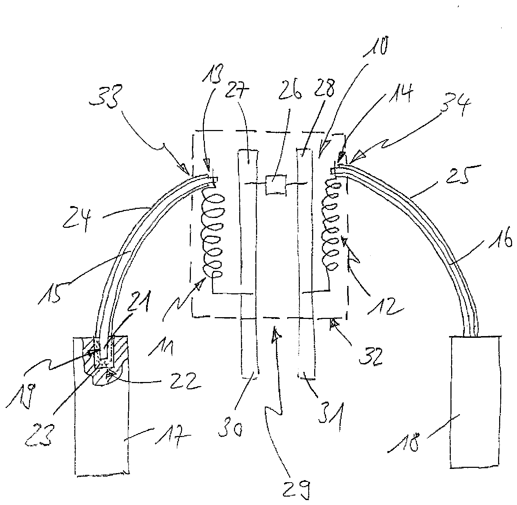

Nachfolgend wird eine bevorzugte Ausführungsform der Kohlebürstenanordnung anhand der Zeichnung näher erläutert.

Die Zeichnung zeigt einen Leiterrahmen 10 mit zwei auf dem Leiterrahmen 10 angeordneten Drosseln 11, 12, die an Kontaktenden 13, 14 mit jeweils einem beispielsweise als Litze ausgebildeten Anschlussleiter 15, 16 von Kohlebürsten 17, 18 verbunden sind. Die Verbindung der Anschlussleiter 15, 16 mit den Kohlebürsten 17, 18 ist im vorliegenden Fall über Stampfkontakte 19 ausgeführt, derart, dass jeweils ein Kontaktende 21 der Anschlussleiter 15, 16 in einer Anschlussbohrung 22 der Kohlebürste 17, 18 angeordnet ist und über ein in der Anschlussbohrung 22 verdichtetes Stampfpulver 23 elektrisch leitend mit der Kohlebürste 17, 18 verbunden ist. Vom Stampfkontakt 19 bis zum Kontaktende 13, 14 der Drosseln 11, 12 erstreckt sich jeweils eine Kunststoffummantelung 24, 25 auf den Anschlussleitern 15, 16, die aus PFA gebildet ist und in einem Spritzgießverfahren auf die Anschlussleiter 15, 16 aufgebracht ist.

Der Leiterrahmen 10 mit den daran angeordneten Drosseln 11, 12 und einem Kondensator 26, der zwei Anschlussleiter 27, 28 des Leiterrahmens 10 miteinander verbindet, bilden zusammen eine Anschlusseinrichtung 29, die über an den Anschlussleitern 27, 28 ausgebildeten Kontaktenden 30, 31 an eine Spannungsversorgung angeschlossen werden kann.

Durch Umspritzen des Leiterrahmens 10 mit einem weiteren Kunststoffmaterial, das ebenfalls aus PFA oder auch aus POM oder PPS gebildet sein kann, ist ein Anschlussgehäuse 32 der Anschlusseinrichtung 29 ausbildet. Wie dargestellt, wird durch die Ausbildung des Anschlussgehäuses 32, also das Umspritzen des Leiterrahmens 10 bzw. der Anschlusseinrichtung 29, das insbesondere im Falle der Verwendung von PFA bei einer bevorzugten Verarbeitungstemperatur von etwa 240 ° Celsius erfolgt, zwischen der Kunststoffummantelung 24, 25 der Anschlussleiter 15, 16 und dem Anschlussgehäuse 32 jeweils ein Übergangsbereich 33, 34 ausgebildet.

Die gute thermoplastische Verarbeitbarkeit im Zusammenhang mit einer gegenüber PTFE höheren Flexibilität und einer ausreichend hohen Temperaturbeständigkeit ermöglichen das Umspritzen der aus PFA gebildeten Kunststoffummantelung 24, 25 der Anschlussleiter 15, 16 mit einem weiteren Kunststoffmaterial in einem Spritzgießverfahren ohne Ausbildung von Fehlstellen in den durch das Umspritzen gebildeten Übergangsbereichen 33, 34 zwischen dem Anschlussgehäuse 32 und der Kunststoffummantelung 24, 25.

## Patentansprüche

1. Kohlebürstenanordnung zum Anschluss an einen Elektromotor mit zumindest einer Kohlebürste (17, 18), die über einen mit einer Kunststoffummantelung (24, 25) versehenen Anschlussleiter (15, 16) mit einer mit einem Anschlussgehäuse (32) aus Kunststoff versehenen Anschlusseinrichtung (29) verbunden ist,
**dadurch gekennzeichnet,**
**dass** die Kunststoffummantelung (24, 25) zumindest in einem Übergangsbereich (33, 34) zum Anschlussgehäuse (32) aus Perfluoralkoxy-Polymer (PFA) besteht und der Übergangsbereich durch Umspritzung der Kunststoffummantelung (24, 25) mit einem weiteren thermoplastischen Kunststoffmaterial, das nämlich ebenfalls aus Perfluoralkoxy-Polymer (PFA) gebildet ist, zur Ausbildung des Anschlussgehäuses (32) ausgebildet ist.

2. Kohlebürstenanordnung nach Anspruch 1,
**dadurch gekennzeichnet,**
**dass** die Kunststoffummantelung (24, 25) auf ihrer gesamten Länge zwischen der Kohlebürste (17, 18) und dem Anschlussgehäuse (32) aus Perfluoralkoxy-Polymer (PFA) besteht.

## Claims

1. A carbon brush arrangement for connection to an electric motor, comprising at least one carbon brush (17, 18) connected to a connection means (29) provided with a plastic connection housing (32) via a connection conductor (15, 16) provided with a plastic sheath (24, 25),
**characterized in that**
the plastic sheath (24, 25) consists of a perfluoroalkoxy polymer (PFA) in at least a region of transition (33, 34) to the connection housing (32) and **in that** the region of transition is formed with another thermoplastic plastic material, which is in particular also made of perfluoroalkoxy polymer (PFA), by extrusion-coating the plastic sheath (24, 25) in order to form the connection housing (32).

2. The carbon brush arrangement according to claim 1,
**characterized in that**
the plastic sheath (24, 25) consists of perfluoroalkoxy polymer (PFA) across its entire length between the carbon brush (17, 18) and the connection housing (32).

## Revendications

1. Ensemble de balai de charbon pour connexion à un moteur électrique comprenant au moins un balai de charbon (17, 18) connecté à un moyen de connexion (29) pourvu d'un boîtier de connexion (32) en matière plastique via un conducteur de connexion (15, 16) pourvu d'une gaine (24, 25) en matière plastique,
**caractérisé en ce que**
la gaine (24, 25) en matière plastique consiste d'un polymère perfluoroalkoxy (PFA) dans au moins une zone de transition (33, 34) vers le boîtier de connexion (32) et **en ce qu'**une zone de transition est formée avec un autre matériau plastique thermoplastique, qui est notamment aussi de polymère perfluoroalkoxy (PFA), en couvrant la gaine (24, 25) en matière plastique par extrusion pour former le boîtier de connexion (32).

2. Ensemble de balai de charbon selon la revendication 1,
**caractérisé en ce que**
la gaine (24, 25) en matière plastique consiste en polymère perfluoroalkoxy (PFA) sur toute sa longueur entre le balai de charbon (17, 18) et le boîtier de connexion (32).
